# EUROPEAN PATENT SPECIFICATION

(11) **EP 2 131 022 B1**
(45) Date of publication and mention of the grant of the patent: **13.07.2011**
(21) Application number: 08157545.8
(22) Date of filing: 04.06.2008
(51) Int. Cl.: F01N 3/20, F02D 9/04, F02M 25/07, F01N 9/00

(54) **Thermal management of the after treatment system**
Wärmeregelung des Nachbehandlungssystems
Gestion thermique d'un système de post-traitement

(43) Date of publication of application: 09.12.2009
(73) Proprietor: Iveco Motorenforschung AG, CH-9320 Arbon (CH)
(72) Inventor: ELLENSOHN, Rudolf, 9434, AU (SG) (CH); FESSLER, Harald, 9320, ARBON (CH)
(74) Representative: Borsano, Corrado

(56) References cited:
- WO-A-03/046354
- WO-A-2007/032714
- WO-A1-2008/033418
- WO-A2-2008/059362
- JP-A- 2002 276 405

## Description

The present invention concerns a method suitable to allow the thermal management of the after treatment system by means of the management of the flow.

As it is known, in the field of internal combustion engine increasingly stricter limits on polluting emissions have required the adoption of systems for the reduction of the emissions.

Different catalytic systems for the reduction of gaseous pollutants such as carbon monoxide, unburnt compounds, nitrous oxides; for instance, in the diesel engine field, particularly for industrial vehicles, catalytic systems known as SCR (Selective Catalytic Reduction) have been proposed; these systems can reduce nitrous oxides with the use of ammonia resulting from a specially fed urea solution.

Other catalysts such as oxidation catalysts can be used alone or in combination with such systems. Furthermore, traps for different types of particulate are frequently used. An exhaust gas current purifies these systems.

A common feature of these systems lies in the need to operate in a specific temperature range. Catalytic systems are ineffective below a given temperature, whereas excessively high temperatures may damage the catalyst irreversibly: for example, SCR systems are active above 200 °C and can be damaged by temperatures exceeding 560-600 °C. Particulate traps also have, depending on the type used, maximum operating temperatures. Furthermore, the continuous regeneration of such traps requires sufficient high temperatures.

Therefore, it is very important to keep the temperature of the after treatment systems within the specific range of temperature.

One drawback left unsolved by the prior art systems consists of the fact that when the engine is actuated as engine brake, otherwise called motored engine, and therefore the engine is in a "non fired" condition, the exhaust gas is cold and this causes an unwanted temperature reduction of the after treatment system.

In fact, in this functioning conditions the "exhaust" gas is formed by cold air and the flow of this cold air in the after treatment system would reduce the efficiency of the after treatment system in an unwanted manner.

WO 2008/059632 A2 shows a combined low and high pressure EGR system with a flap upstream the turbine and a flap in the high pressure EGR circuit. The high pressure EGR is guided to the engine intake downstream the charge air cooler. The high pressure EGR circuit is used when the engine is at low load.

W02008/033418 A1 shows a combined low and high pressure EGR system with a flap in the high pressure EGR circuit. The high pressure EGR can be guided to the engine intake upstream the charge air cooler which is arranged downstream of the compressor.

The aim of the present invention is to eliminate or reduce the drawbacks afflicting the known exhaust heat recuperation systems provided on the internal combustion engines when the engine is functioning in a motored engine condition.

Within this aim, it is an object of the present invention to provide a thermal management method suitable to easily and automatically control the temperature of the gases in the after treatment system by means of the flow management of the exhaust gas.

This aim, and these and other objects are achieved by a method for the thermal management of the after treatment system according to claim 1.

Advantageously, the control means suitable to manage the exhaust gas flow to the after treatment system is constituted by a remotely controlled flap provided upstream the after treatment system.

Further advantages of the present invention will become more clear from the following detailed description of preferred but not exclusive embodiments and from the drawings herewith attached, which are merely illustrative and not limitative of the present invention, in which:
figure 1 schematically represents a known scheme of an internal combustion engine provided with low pressure EGR, with after treatment system and with control means;
figure 2 schematically represents known scheme of an internal combustion engine provided with high pressure EGR, with after treatment system and with control means;
figure 3 schematically represents a scheme of an internal combustion engine provided with after treatment system and with control means suitable to actuate the method according to the present invention.

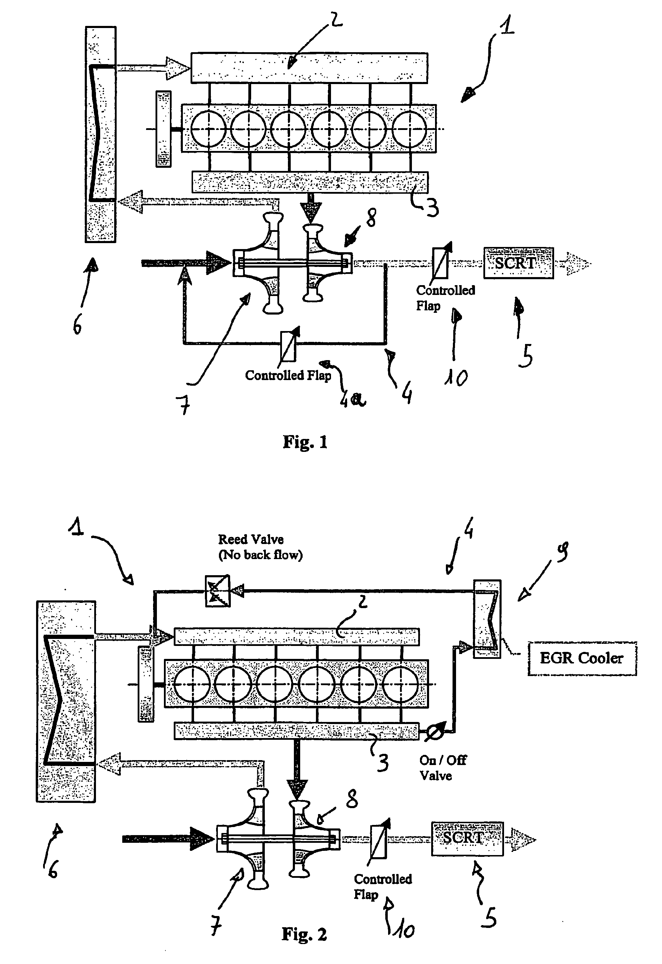

With reference to the above mentioned figures 1 and 2, an internal combustion engine 1 provided with exhaust gas recirculation (EGR) 4 system and after treatment system 5 is considered.

As it is known, the exhaust gas recirculation (EGR) 4 reduces the engine-out NOₓ emissions by recirculating a portion of the engine's exhaust and then introducing it upstream of the engine, into the inlet 2, in order to dilute the oxygen content of the ambient air entering the engine combustion chamber. Reducing the oxygen content lowers the combustion temperature, which in turns results in less NOₓ being formed.

EGR technology involves recirculating a portion of an engine's exhaust back into the turbocharger 7 inlet, or the intake manifold of a naturally aspirated engine.

In most EGR systems, an intercooler 9 lowers the temperature of the recirculated exhaust, see also WO 2007/032714 A1.

In the figures is represented a turbocharged engine in which a turbine 8 and a compressor 7 are illustrated.

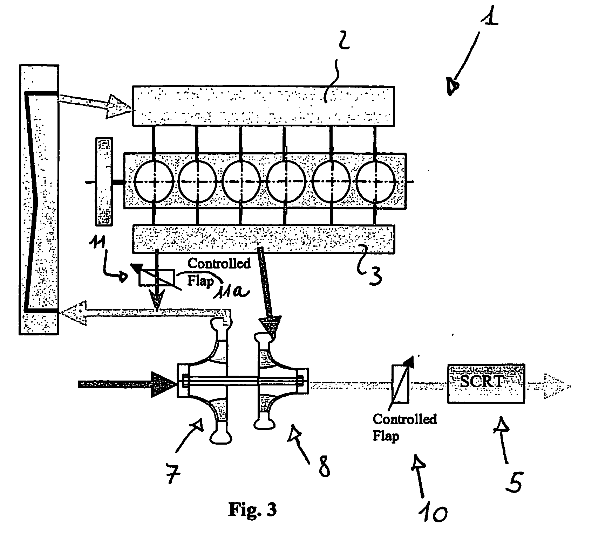

As it is known, there are two distinctively types of EGR available: the so called low pressure EGR, figure 1, in which the exhaust gases are recirculated between two low pressure points, exhaust system pipe and turbocharger inlet, and the so called high pressure EGR, in which the exhaust gases are recirculated between two high pressure points, exhaust manifold and inlet manifold, this scheme being shown in figure 2, see also WO 03/046354 A1. The engine 1 is usually also provided with a cooler 6 on the inlet line, as it is known in the art. In figure 3 is represented a not recirculated internal combustion engine provided with an after treatment system 5.

According to the present invention, on the exhaust gas line and upstream the after treatment system 5, control means 10 are provided in order to regulate and control the exhaust gas flow to the after treatment system.

Said control means 10 can comprise, for example, a controlled flap or valve, as shown in the figures, suitable to control the flow of the exhaust gases through the exhaust gas line.

The control means 10 are remotely actuated and controlled for example by means of a control unit, not shown in the figures. By means of this control unit, the control means 10 can be actuated in order to manage the flow of the exhaust gases to the after treatment system in order to keep the temperature of the after treatment system to the desired values.

More in detailed, during the phase of motored engine (non fired) the temperature of the exhaust gases is low since the gases are mainly composed by air. In this situation it should be necessary to avoid the flow of the gases through the after treatment system in order to avoid the cooling of the after treatment system itself. If the engine is provided with an EGR recirculation system, as shown in figures 1 and 2, it is possible to use the EGR circuit to ROUT back to the inlet of the engine the air flow during the motored engine phase.

Otherwise, in the event that the engine is not provided with an EGR circuit, figure 3, it is necessary to specially provide the engine with an additional by-pass pipe 11 which is a shortcut connecting a point of the exhaust gas line before the turbine 8 to a point of the inlet 2 before the cooler 6.

As shown in figure 3, the by-pass 11 is additionally provided with by-pass flow control means 11 a suitable to manage the exhaust gas flow.

The method for thermal management of the after treatment system according to the present invention comprises the following steps.

By means of a control unit, not shown in the figures, it is possible to instantaneously check the operating condition of the engine.

When the engine is working in a phase of motored engine, and therefore there is no combustion of the fuel in the cylinders, the exhaust gases are constituted by cold air. Therefore, the functioning condition of the engine can be determined, for example, also by monitoring the temperature of the exhaust gases.

Several other methods can be used to check and determine the operating condition of the engine, without limiting the method of the present invention. Once the motored engine operating condition is detected, the control unit sends a signal to the control means 10 in order to reduce or eventually block the flow of the cold gases to the after treatment system.

If the engine has the known configuration of figure 1, when the control means 10 block the exhaust gas flow to the after treatment system 5, the gas flow is routed back in the EGR circuit 4, another control valve 4a being eventually provided also on this back flow line.

In the same way, if the engine is provided with a known high pressure EGR circuit as per figure 2, when the control means 10 block the exhaust flow the gases are routed back to the inlet by means of the EGR circuit.

An important advantage achieved by the method for the thermal management of the after treatment system according to the present invention is the possibility to adjust the optimal after treatment operating temperature by the flow control of the exhaust gas which flows through the after treatment system.

It has been shown that the present invention achieves the aim and the objects proposed.

More in detail, it has been shown that the method for the thermal management of the after treatment system according to the present invention is suitable to improve the efficiency of the after treatment catalysts.

Moreover, the method according to the present invention is suitable to improve the fuel consumption due to the more efficient after treatment system.

## Claims

1. Method for the thermal management of the after treatment system (5) of an internal combustion engine (1) of the kind comprising at least a turbocharger (7, 8) and a cooler (6) on the inlet line, comprising the following steps:
- providing the exhaust gas line with specially designed control means (10) positioned upstream the after treatment system (5);
- check the functioning condition of the engine by means of a control unit;
- in the event that the functioning condition of the engine is a motored engine phase, said control unit actuates said control means (10) provided on the exhaust gas line in order to manage the flow of the exhaust gas to the after treatment system (5),
- **characterized in that** said engine (1) is provided with an additional by-pass pipe (11) connecting a point of the exhaust gas line upstream of the turbine (8) to a point of the inlet (2) upstream of said cooler (6) wherein said by-pass pipe (11) is additionally provided with by-pass flow control means (11 a) suitable to manage the exhaust flow.

2. Method according to the previous claim, **characterized in that** said control means (10) comprise a flap or valve suitable to reduce or block the flow of the exhaust gas to the after treatment system (5).

3. Method according to one of the preceding claims, **characterized in that** when said control means (10) are actuating thus blocking or reducing the exhaust gas flow to the after treatment system (5) the flow which does not pass through the after treatment is routed back to the inlet of the engine.

4. Internal combustion engine **characterized in that** it comprises a system for the thermal management of the after treatment system by flow management that performs the method according to any of the preceding claims.

5. Vehicle comprising a system for the thermal management of the after treatment system by flow management that performs the method according to any of the claims from 1 to 3.

## Patentansprüche

1. Verfahren für die thermische Regulierung des Nachbehandlungssystems (5) eines Verbrennungsmotors (1) des Typs, der zumindest einen Turbolader (7, 8) und einen Kühler (6) an der Einlassleitung umfasst, mit den folgenden Schritten, dass:
- die Abgasleitung mit speziell ausgelegtem Steuermittel (10) versehen wird, das stromaufwärts des Nachbehandlungssystems (5) positioniert ist;
- der Funktionszustand des Motors mittels einer Steuereinheit geprüft wird;
- in dem Fall, dass der Funktionszustand des Motors eine angetriebene Motorphase ist, die Steuereinheit das Steuermittel (10), das an der Abgasleitung vorgesehen ist, betätigt, um die Strömung des Abgases zu dem Nachbehandlungssystem (5) zu regulieren,
- **dadurch gekennzeichnet, dass** der Motor (1) mit einem zusätzlichen Bypassrohr (11) versehen ist, das einen Punkt der Abgasleitung stromaufwärts der Turbine (8) mit einem Punkt des Einlasses (2) stromaufwärts des Kühlers (6) verbindet, wobei das Bypassrohr (11) zusätzlich mit einem Bypassströmungssteuermittel (11a) versehen ist, das geeignet ist, die Abgasströmung zu regulieren.

2. Verfahren nach einem der vorhergehenden Ansprüche,
**dadurch gekennzeichnet, dass** das Steuermittel (10) eine Klappe oder ein Ventil umfasst, die/das geeignet ist, die Strömung des Abgases zu dem Nachbehandlungssystem (5) zu reduzieren oder zu blockieren.

3. Verfahren nach einem der vorhergehenden Ansprüche,
**dadurch gekennzeichnet, dass**,
wenn das Steuermittel (10) betätigt wird, wodurch die Abgasströmung zu dem Nachbehandlungssystem (5) blockiert oder reduziert wird, die Strömung, die nicht durch die Nachbehandlung gelangt, zurück an den Einlass des Motors geführt wird.

4. Verbrennungsmotor,
**dadurch gekennzeichnet, dass** er ein System für die thermische Regulierung des Nachbehandlungssystems durch Strömungsregulierung umfasst, die das Verfahren nach einem der vorhergehenden Ansprüche ausführt.

5. Fahrzeug, umfassend ein System für die thermische Regulierung des Nachbehandlungssystems durch Strömungsregulierung, das das Verfahren nach einem der Ansprüche 1 bis 3 ausführt.

## Revendications

1. Procédé de gestion thermique du système de post-traitement (5) d'un moteur à combustion interne (1) du type comprenant au moins un turbocompresseur (7, 8) et un refroidisseur (6) sur la conduite d'entrée, comprenant les étapes suivantes :
- pourvoir la conduite de gaz d'échappement d'un moyen de commande spécialement conçu (10) positionné en amont du système de post-traitement (5) ;
- contrôler l'état de fonctionnement du moteur au moyen d'une unité de commande ;
- dans le cas où l'état de fonctionnement du moteur est une phase motorisée du moteur, ladite unité de commande actionne ledit moyen de commande (10) pourvu sur la conduite de gaz d'échappement pour gérer le flux de gaz d'échappement vers le système de post-traitement (5) ;
- **caractérisé en ce que** ledit moteur (1) est pourvu d'un tuyau de dérivation supplémentaire (11) reliant un point de la conduite de gaz d'échappement en amont de la turbine (8) à un point de l'entrée (2) en amont dudit refroidisseur (6), dans lequel ledit tuyau de dérivation (11) est en outre pourvu d'un moyen de régulation de flux de dérivation (11a) apte à gérer le flux d'échappement.

2. Procédé selon la revendication précédente, **caractérisé en ce que** ledit moyen de commande (10) comprend une trappe ou une valve apte à réduire ou à bloquer le flux de gaz d'échappement vers le système de post-traitement (5).

3. Procédé selon l'une des revendications précédentes, **caractérisé en ce que**, lorsque ledit moyen de commande (10) est actionné et ainsi bloque ou réduit le flux de gaz d'échappement vers le système de post-traitement (5), le flux qui ne traverse pas le post-traitement est renvoyé vers l'entrée du moteur.

4. Moteur à combustion interne **caractérisé en ce qu'**il comprend un système de gestion thermique du système de post-traitement par gestion de flux qui effectue le procédé selon l'une quelconque des revendications précédentes.

5. Véhicule comprenant un système de gestion thermique du système d'après-traitement par gestion de flux qui effectue le procédé selon l'une quelconque des revendications 1 à 3.
